# EUROPEAN PATENT APPLICATION

(11) **EP 1 753 114 A1**
(43) Date of publication of application: **14.02.2007**
(21) Application number: 05023778.3
(22) Date of filing: 31.10.2005
(51) Int. Cl.: H02K 7/18, H02K 35/00

(54) **Vibrator power generator**

(30) Priority: 12.08.2005 CN 200520103709
(71) Applicant: Chen, Chuan Sheng, Taipei (TW)
(72) Inventor: Chen, Chuan Sheng, Taipei (TW)
(74) Representative: Carpintero Lopez, Francisco

(57) **Abstract**

A vibration power generator with minimum power consumption, light-weight, lower production cost, and providing consistent and significant power generation and comprehensive applications that operates directly by a magnet without any yoke or iron core has its windings around a yoke otherwise in circular pattern changed to a flat pattern; the windings being inserted into a disk and evenly distributed over both sides of the disk to produce magnetic poles as driven by a magnetic field; and in turn the disk being driven to revolve by magnetic poles to output power together with the counter force from the magnet.

## Description

### BACKGROUND OF THE INVENTION

### (a) Technical Field of the Invention

The present invention is related to a vibration power generator, and more particularly to one that produces magnetic field either by vertical and lateral vibration or by random oscillation to further generate power by changing the otherwise circular winding pattern into a flat pattern.

### (b) Description of the Prior Art

There is a number of power generator or power generation means including power generation by fossils, hydraulic power generation, solar power generation and nuclear power generation. Taking the power generation by fossils for an example, the fuel or coal consumed for power generation will produce carbon dioxide and greenhouse effect resulting in natural hazards and damages to the environment and human health. A clean energy becomes everybody's concern. Therefore, resolutions to hydraulic, solar, and wind velocity though present no serious issue of environmental production is limited in its scale for being subject to various ecologic environment limitations.

Furthermore, any form of the prior art for power generation has to rely upon external force to drive the generator, and the generator is usually comprised of multiple windings-wrapped around a magnet to produce magnetic field by revolving the entire unit in circular pattern, a main cause explains the absence of further development for the power generator of the prior art. Therefore, how to achieve a basic change of the pattern of power generation is a primary objective for the R&D efforts in the design of a power generator.

### SUMMARY OF THE INVENTION

The primary purpose of the present invention is to provide a vibration power generator that generates power without interruption, gives valuable industrial value, and eliminates those flaws found with the prior art working on having windings wrapped around a magnet in a circular pattern to produce magnetic field and thus electric power by having the entire circular pattern to revolve. To achieve the purpose, the axes revolving in circle and windings wrapped around the axes in circle are entirely changed to lateral or vertical pattern to produce magnetic field and generate power by having those windings or the magnet to vibrate laterally and vertically or oscillate at random. The present invention includes multiple windings, a magnetic disk, and a magnet to produce magnetic field by attraction and rejection among N-pole and S-pole of the magnet and those of the magnetic disk through lateral and vertical vibration or random oscillation for those windings to generate power in turn.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

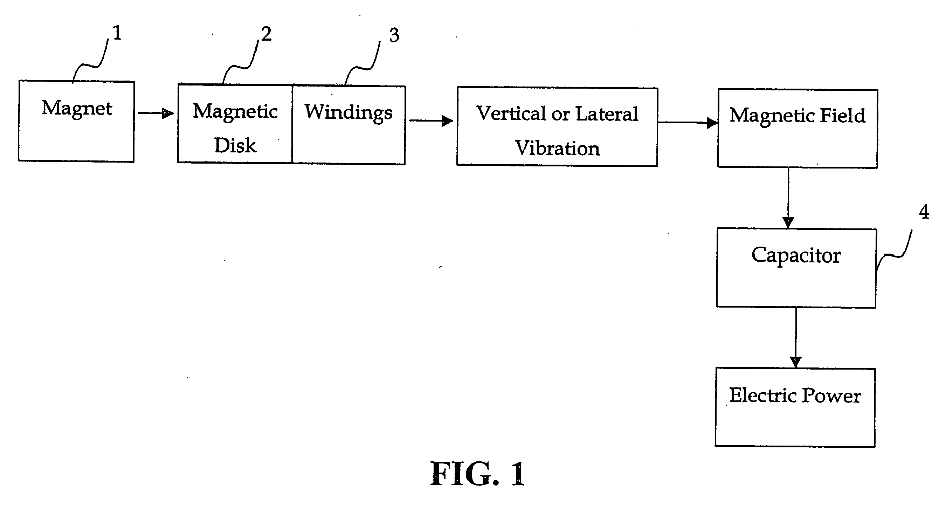

Fig. 1 is a block chart of the present invention.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

As illustrated in Fig. 1, a vibration power generator of the present invention is essentially comprised of a magnet 1, a magnetic disk 2, multiple windings 3 and a capacitor 4. Wherein, those windings 3 are incorporated to the magnetic disk 2 and arranged in a vertical or lateral pattern. A magnetic field is produced by the working principle of attraction and rejection among both of N-pole and S-pole of the magnet 1 and those of the magnetic disk 2 for those windings to generate power. Whereas those windings 3 penetrate through and distribute on both sides of the magnetic disk 2 in a flat or vertical pattern, magnetic field and electric energy are produced to generate power through stabilization at the capacitor 4 when the magnet 1 or those windings 3 vibrates vertically and laterally or oscillates at random.

The present invention to generate power by vibration provides comprehensive applications in finished products including cellular phone, radio, MP3, photographical facilities, power bike, power motorcycle, automotive cell unit, generator of family size or any other size as small as a battery or an super large power generation plant, and even in tidal power generation.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A vibration power generator is essentially comprised of a magnet, a magnetic disk, multiple windings and a capacitor, windings being incorporated with the magnetic disk in vertical or lateral pattern; the magnet or the windings vibrating laterally and vertically or oscillating at random; a magnetic being produced by attraction and rejection among both N-pole and S-pole of the magnet and those of the magnetic disk; and electric energy being generated by the windings.

2. The vibration power generator of Claim 1, wherein the multiple windings are arranged in lateral or vertical pattern by penetrating through both sides of a magnetic disk.

3. The vibration power generator of Claim 1, power generated from attraction and rejection among N-pole and S-pole of the magnet and those of the magnetic disk is stored and stabilized by means of a capacitor.
